# FASCICULE DE BREVET EUROPEEN

(11) **EP 3 075 900 B1**
(45) Date de publication et mention de la délivrance du brevet: **07.06.2017**
(21) Numéro de dépôt: 16163341.7
(22) Date de dépôt: 31.03.2016
(51) Int. Cl.: D06M 13/00, A23L 3/3409, A23L 27/27

(54) **PROCÉDÉ DE TRANSFERT D'UN GOUT FUMÉ VERS UNE SUBSTANCE COMESTIBLE**
VERFAHREN ZUM ÜBERTRAGEN EINES RÄUCHERGESCHMACKS AUF EINE ESSBARE SUBSTANZ
METHOD FOR TRANSFERRING A SMOKED FLAVOUR TO AN EDIBLE SUBSTANCE

(30) Priorité: 03.04.2015 FR 1552892
(43) Date de publication de la demande: 05.10.2016
(73) Titulaire: Parmentier, Georges, 60610 La Croix Saint-Ouen (FR); Parmentier, Laurent, 60610 La Croix Saint-Ouen (FR)
(72) Inventeur: Parmentier, Georges, 60610 La Croix Saint-Ouen (FR); Parmentier, Laurent, 60610 La Croix Saint-Ouen (FR)
(74) Mandataire: Novagraaf Technologies

(56) Documents cités:
- CN-A- 101 503 863
- JP-B1- 2 843 559
- US-A1- 2006 251 773

## Description

La présente invention concerne de manière générale un procédé de transfert d'un gout fumé vers une substance comestible.

Les techniques traditionnelles de fumage (que ce soit le fumage à froid ou à chaud) des aliments présentent de nombreux inconvénients. Si l'on souhaite, outre le fait de conserver le produit, l'aromatiser avec un gout fumé (par exemple pour des jambons ou des saucissons, ou encore des fromages), ces techniques nécessitent de disposer d'équipements professionnels pouvant être volumineux et onéreux (tels que des bacs de salaison équipés d'injecteurs de saumure, fumoir ou un four traditionnel à bois).

Par ailleurs, le brevet Japonais JP 2843559 décrit le fumage d'un tissu absorbant comprenant l'introduction d'un tissu absorbant dans un fumoir, dont la température est comprise entre 20 et 60°C, à l'intérieur duquel se trouve des copeaux de fumage (par exemple de cerisier, chêne ou sapin), puis son fumage pendant une durée variant entre 15 minutes et 1 heure. Puis, on introduit ce tissu fumé et une substance comestible dans un même conteneur, en vue de transférer le gout fumé du tissu vers la substance comestible.

Avec de tels dispositifs, il est difficile d'obtenir des substances comestibles liquides semi-liquides, voire même pâteuses présentant un gout fumé.

Pour résoudre les problèmes précités, le déposant a mis procédé, qui comprend le fumage d'un tissu absorbant dans un fumoir, puis son introduction dans le conteneur recevant la substance comestible.

Plus particulièrement, la présente invention a pour objet un procédé de transfert d'un gout fumé vers une substance comestible comprenant :
- l'introduction de ladite substance dans un conteneur ; puis
- la réalisation d'un tissu absorbant fumé, comprenant :
   o la fourniture d'un tissu non tissé en viscose, avec un poids surfacique variant de 25 g/m² à 300 g/m² ;
   o l'introduction dudit tissu dans un fumoir comprenant des copeaux ou de la poudre de fumage et à l'intérieur duquel la température est comprise entre 40°C et 80°C, et est de préférence de l'ordre de 60°C ;
   o fumage dudit tissu pendant une durée comprise entre 6 et 24 heures (6 heures si l'on souhaite utiliser le tissu absorbant pour conférer à un aliment un gout fumé peu intense, 12 heures pour conférer un gout fumé moyennement intense et 24 heures pour conférer un gout fumé très intense) ; et
- l'introduction dans ledit conteneur ainsi rempli du dudit tissu absorbant fumé ainsi obtenu ;
ledit procédé étant caractérisé en ce que la substance comestible est une substance liquide, semi-liquide ou pâteuse. A titre de tissu absorbant, on utilise, de préférence, dans le cadre de la présente invention, un tissu non tissé constitué à 100% de viscose, avec un poids surfacique de l'ordre de 45 g/m². Un tel tissu est apte à absorber jusqu'à 20 fois son poids d'eau en moins de 8 secondes.

De manière avantageuse, on pourra utiliser pour le fumage du tissu absorbant des copeaux ou de la poudre de fumage (ou sciure de fumage) choisis parmi les copeaux secs ou humides de de bois de hêtre, de chêne, de tamarin, et de bouleau, la sciure de bois, et de préférence la sciure de bois de hêtre, et les écorces de châtaignes, de noix, et de fruits, etc..

Dans le procédé selon l'invention, il est également possible d'utiliser différentes essences de bois, ou de manière générale tout autre produit (notamment boisé), qui est généralement utilisé en fumage traditionnel. Dans le procédé selon l'invention on utilise une substance comestible liquide, semi-liquide ou pâteuse.

Selon un premier mode de réalisation particulièrement avantageux du procédé selon l'invention, la substance comestible que l'on souhaite aromatiser avec un gout fumé est une substance liquide. Dans ce cas, l'étape d'introduction du tissu dans le conteneur est suivie d'une étape d'agitation du conteneur, pour faciliter le transfert du gout fumé du tissu vers ladite substance.

Selon un deuxième mode de réalisation particulièrement avantageux du procédé selon l'invention, la substance comestible que l'on souhaite aromatiser avec un gout fumé est une substance semi-liquide ou pâteuse (par exemple une sauce épaisse (non liquide) ou de la mayonnaise), qui est contenue dans un sachet souple pouvant être hermétiquement fermé à titre de conteneur. Dans ce cas, l'étape d'introduction du tissu dans le sachet souple est suivie
- d'une étape de fermeture dudit conteneur, puis
- d'au moins une étape de malaxage du sachet souple, pour faciliter le transfert du gout fumé du tissu vers ladite substance, suivie
- d'une étape de conservation à froid dudit sachet souple, de préférence à une température comprise entre 0 et 4°C.

Pour obtenir des substances comestibles ayant des gouts fumés différents, on pourra utiliser des toiles qui ont été fumées plus ou moins intensément.

Ainsi, si l'on souhaite conférer un gout fumé peu intense à un aliment (fumage dit « doux »), le tissu absorbant restera moins longtemps dans le fumoir (durée du fumage du tissu absorbant d'environ 6 heures).

Si l'on souhaite conférer un gout fumé moyennement intense à un aliment (fumage dit « moyen »), le tissu absorbant restera plus longtemps dans le fumoir (durée du fumage du tissu absorbant d'environ 12 heures).

Si l'on souhaite conférer un gout fumé très intense à un aliment (fumage dit « fort » ou « intense »), le tissu absorbant restera au mois 24 heures dans le fumoir.

L'utilisation du procédé selon l'invention pour donner un gout fumé selon l'invention à des substances comestibles, permet aux personnes étant au régime sans sel, de donner un goût fumé aux aliments qu'elles consomment ayant un goût fade par manque de sel.

Par ailleurs, les tissus absorbants (ou toiles) qui ont servi à transférer un gout fumé aux aliments (tel que du saumon par exemple) peuvent être utilisés une nouvelle fois (si les examens bactériologiques le permettent, par exemple pour transférer un gout fumé dans l'eau de cuisson des bulots.

Avant l'introduction du tissu fumé dans le conteneur, il est possible de mettre sous vide le tissu absorbant une fois fumé. En particulier, immédiatement après la phase de fumage, les tissus absorbants fumés peuvent être mis sous vide dans un sachet souple afin d'égaliser les odeurs de fumée entre les différentes toiles. Ainsi par exemple, on peut introduire dans un sachet sous vide entre 10 et 60 tissus fumés environ. Ce procédé peut durer entre quelques jours et plusieurs mois : une fois le tissu (s) fumé (s) introduit (s) dans le sachet, on fait le vide et on laisse sous vide pendant une durée pouvant aller de quelques jours) plusieurs semaines, voire plusieurs mois.

Dans ces paquets de tissu(s) absorbant(s) sous vide, ou dans une seule toile, il est possible d'incorporer en outre des produits alimentaires ou des aromates (par exemple du thym, du laurier, de l'ail, etc.). Il se produit alors un transfert de gout entre les toiles et les produits alimentaires. Ensuite, les toiles et les produits alimentaires peuvent être utilisés individuellement pour des préparations culinaires.

L'invention est illustrée plus en détail dans les exemples suivants.

### EXEMPLES

### Produits

- eau,
- boissons,
- lait,
- pâtes, riz, pommes de terres, bulots (et tout aliment pouvant être cuit à l'eau),
- morceau de tissu absorbant non tissé en viscose, avec un poids surfacique variant de 25 g/m² à 300 g/m² et pouvant se présenter sous la forme d'un rectangle de dimensions 10 cm X 20 cm ; ce tissu est fumé dans un fumoir comprenant des copeaux ou de la poudre de fumage et à l'intérieur duquel la température est comprise entre 40°C et 80°C. La durée du fumage est comprise entre 6 et 24 heures.

### EXEMPLE 1 selon l'invention : eau au gout fumé

On introduit le morceau de tissu absorbant fumé dans 1,5 litre d'eau, et on obtient immédiatement de l'eau avec une couleur et un goût fumé, la couleur et le goût étant variables selon la taille du tissu absorbant utilisé et la durée de son fumage. On peut procéder de la même manière pour n'importe quel type de boisson.

Cette eau à gout fumé peut-être bue rapidement. Elle présente alors un intérêt car elle permet de cacher le goût de Javel de l'eau du robinet. L'eau à gout fumé peut également être utilisée dans la préparation de boissons anisées ou pour la préparation de glaçons, et autres produits glacés.

Cette eau à gout fumé peut également servir à cuire divers aliments dont la cuisson peut se faire dans de l'eau. Par exemple, pour la cuisson de bulots, pâtes, riz, on utilisera de l'eau qui a été fumée selon le procédé de l'invention avec le morceau de tissu absorbant.

Il est également possible d'obtenir un concentré de fumage en utilisant un alambic.

### EXEMPLE 2 selon l'invention : lait au gout fumé

On introduit le morceau de tissu absorbant fumé dans 1 litre de lait, et l'on remue de temps en temps (1 fois toutes les 20 minutes au maximum). Cette préparation doit rester au froid (en l'occurrence dans un réfrigérateur à une température d'environ 3°C) pendant une durée minimale de 1 heure.

On obtient ainsi du lait ayant un gout fumé, qu'il est possible d'utiliser pour réaliser une purée de pommes de terre.

De manière avantageuse, les pommes de terre pourront aussi être cuites avec de l'eau ayant un gout fumé et obtenue conformément au procédé décrit à l'exemple 1 décrit ci-dessus. On peut également utiliser ce lait au gout fumé pour la réalisation de crèmes glacées.

### EXEMPLE 3 selon l'invention : sauce au gout fumé

On introduit le morceau de tissu absorbant fumé dans un sachet plastique souple « alimentaire » (de préférence sachets pour cuisson sous vide), et un litre de sauce (ou tout autre produit de consistance plus ou moins pâteuse) que l'on souhaite aromatiser avec un gout fumé.

Puis, on ferme le sachet (de préférence, on le met sous vide) et on le malaxe 2 à 6 fois pendant une durée de 24 heures.

Cette préparation doit rester au froid (en l'occurrence dans un réfrigérateur à une température d'environ 3°C) pendant une durée minimale de 1 à 6 jours.

## Revendications

1. Procédé de transfert d'un gout fumé vers une substance comestible comprenant :
- l'introduction de ladite substance dans un conteneur ; puis
- la réalisation d'un tissu absorbant fumé, comprenant :
o la fourniture d'un tissu non tissé en viscose, avec un poids surfacique variant de 25 g/m² à 300 g/m² ;
o l'introduction dudit tissu dans un fumoir comprenant des copeaux ou de la poudre de fumage et à l'intérieur duquel la température est comprise entre 40°C et 80°C, et est de préférence de l'ordre de 60°C ; et
o le fumage dudit tissu pendant une durée comprise entre 6 et 24 heures pour obtenir un tissu absorbant fumé ; et
- l'introduction dans ledit conteneur ainsi rempli du dudit tissu absorbant fumé ainsi obtenu,
ledit procédé étant **caractérisé en ce que** la substance comestible est une substance liquide, semi-liquide ou pâteuse.

2. Procédé tel que défini selon la revendication 1, dans lequel la substance est une substance liquide et l'étape d'introduction du tissu dans le conteneur est suivi d'une étape d'agitation du conteneur, pour faciliter le transfert du gout fumé du tissu vers ladite substance.

3. Procédé tel que défini selon la revendication 1, dans lequel la substance est une substance semi-liquide ou pâteuse, le conteneur est un sachet souple pouvant être hermétiquement fermé, et l'étape d'introduction du tissu dans le sachet est suivie
- d'une étape de fermeture dudit conteneur, puis
- d'au moins une étape de malaxage du sachet, pour faciliter le transfert du gout fumé du tissu vers ladite substance, suivie
- d'une étape de conservation à froid dudit sachet, de préférence à une température comprise entre 0 et 4°C.

4. Procédé selon l'une quelconque des revendications précédentes, dans lequel le tissu absorbant est un tissu non tissé en viscose, avec un poids surfacique de 45 g/m².

5. Procédé selon l'une quelconque des revendications précédentes, dans lequel les copeaux ou de la poudre de fumage sont choisis parmi :
• les copeaux secs ou humides de bois de hêtre, de chêne, de tamarin, et de bouleau,
• la sciure de bois, de préférence de bois de hêtre, et
• les écorces de châtaignes, de noix, et de fruits.

6. Procédé selon l'une quelconque des revendications précédentes, dans lequel le fumage dure environ 6 heures.

7. Procédé selon l'une quelconque des revendications 1 à 5, dans lequel le fumage dure environ 12 heures.

8. Procédé selon l'une quelconque des revendications 1 à 5, dans lequel le fumage dure environ 24 heures.

## Patentansprüche

1. Verfahren zur Übertragung eines Räuchergeschmacks auf eine genießbare Substanz, das Folgendes umfasst:
- Einbringen der besagten Substanz in einen Behälter; dann
- Herstellen eines geräucherten absorbierenden Gewebes, was Folgendes umfasst:
- - Bereitstellen eines Viskose-Vliesgewebes mit einem Flächengewicht, das von 25 g/m² bis 300 g/m² variiert,
- - Einbringen des besagten Gewebes in eine Räucherkammer, die Räucherspäne oder -pulver umfasst und in deren Inneren die Temperatur zwischen 40 °C und 80 °C liegt und vorzugsweise in der Größenordnung von 60 °C ist; und
- - Räuchern des besagten Gewebes für eine Dauer, die zwischen 6 und 24 Stunden liegt, um ein geräuchertes absorbierendes Gewebe zu erhalten; und
- Einbringen des so erhaltenen besagten geräucherten absorbierenden Gewebes in den so gefüllten Behälter,
wobei das Verfahren **dadurch gekennzeichnet ist, dass** die genießbare Substanz eine flüssige, halbflüssige oder pastöse Substanz ist.

2. Verfahren nach Anspruch 1, wobei die Substanz eine flüssige Substanz ist und auf den Schritt des Einbringens des Gewebes in den Behälter ein Schritt des Bewegens des Behälters folgt, um die Übertragung des Räuchergeschmacks des Gewebes auf die besagte Substanz zu erleichtern.

3. Verfahren nach Anspruch 1, wobei die Substanz eine halbflüssige oder pastöse Substanz ist, der Behälter ein weicher Beutel ist, der luftdicht verschlossen werden kann, und auf den Schritt des Einbringens des Gewebes in den Beutel Folgendes folgt:
- ein Schritt des Schließens des besagten Behälters, dann
- mindestens ein Schritt des Rührens des Beutels, um die Übertragung des Räuchergeschmacks des Gewebes auf die besagte Substanz zu erleichtern, gefolgt von
- einem Schritt des Kältekonservierens des besagten Beutels, vorzugsweise bei einer Temperatur, die zwischen 0 und 4 °C liegt.

4. Verfahren nach einem der vorhergehenden Ansprüche, wobei das absorbierende Gewebe ein Viskose-Vliesgewebe mit einem Flächengewicht von 45 g/m² ist.

5. Verfahren nach einem der vorhergehenden Ansprüche, wobei die Räucherspäne oder das Räucherpulver aus folgenden ausgewählt sind:
- trockenen oder feuchten Buchen-, Eichen-, Tamarind- und Birkenholzspänen,
- Sägespänen, vorzugsweise aus Buchenholz und
- Esskastanien-, Nuss- und Obstschalen.

6. Verfahren nach einem der vorhergehenden Ansprüche, wobei das Räuchern ungefähr 6 Stunden dauert.

7. Verfahren nach einem der Ansprüche 1 bis 5, wobei das Räuchern ungefähr 12 Stunden dauert.

8. Verfahren nach einem der Ansprüche 1 bis 5, wobei das Räuchern ungefähr 24 Stunden dauert.

## Claims

1. Method for transferring a smoked taste to an edible substance, in which:
- said substance is inserted into a container;
then
- a smoked absorbent fabric is created, wherein:
- - a non-woven fabric made of viscose is provided, with a surface density varying from 25g/m² to 300g/m²;
- - said fabric is inserted into a smoker comprising smoking chips or powder and in which the temperature is between 40°C and 80°C and is preferably approximately 60°C; and
- - said fabric is smoked for a time between 6 and 24 hours in order to obtain a smoked absorbent fabric; and
- said smoked absorbent fabric thus obtained is inserted into said container thus filled with,
said method being **characterised in that** the edible substance is a liquid, semi-liquid or paste-like substance.

2. Method as defined according to claim 1, wherein the substance is a liquid substance and the step of inserting the fabric into the container is followed by a step of shaking the container, in order to facilitate the transfer of the smoked taste from the fabric to said substance.

3. Method as defined according to claim 1, wherein the substance is a semi-liquid or paste-like substance, the container is a flexible bag that can be hermetically sealed, and the step of inserting the fabric into the bag is followed
- by a step of closing said container, then
- at least one step of stirring the bag, in order to facilitate the transfer of the smoked taste from the fabric to said substance, followed
- by a step of keeping said bag cold, preferably at a temperature between 0 and 4°C.

4. Method according to any of the previous claims, wherein the absorbent fabric is a non-woven fabric made of viscose, with a surface density of 45 g/m².

5. Method according to any of the previous claims, wherein the smoking chips or powder are chosen from:
- dry or wet chips of beech, oak, tamarind and birch wood,
- sawdust, preferably from beech wood, and
- the shells of chestnuts, nuts and fruit.

6. Method according to any of the previous claims, wherein the smoking last approximately 6 hours.

7. Method according to any of claims 1 to 5, wherein the smoking lasts approximately 12 hours.

8. Method according to any of claims 1 to 5, wherein the smoking lasts approximately 24 hours.
